# EUROPEAN PATENT SPECIFICATION

(11) **EP 3 736 196 B1**
(45) Date of publication and mention of the grant of the patent: **09.03.2022**
(21) Application number: 20173330.0
(22) Date of filing: 06.05.2020
(51) Int. Cl.: B62B 13/10

(54) **SLEDGE WITH LEVER-STEERABLE RUNNERS**
SCHLITTEN MIT HEBELLENKBAREN KUFEN
TRAÎNEAU DOTÉ DE RAILS ORIENTABLES PAR UN LEVIER

(30) Priority: 07.05.2019 ES 201900228 U
(43) Date of publication of application: 11.11.2020
(73) Proprietor: Acción Penas, Antonio, 15174 Culleredo (ES)
(72) Inventor: Acción Penas, Antonio, 15174 Culleredo (ES)
(74) Representative: García Gómez, José Donato

(56) References cited:
- AT-B- 173 615
- DE-C- 225 550
- FR-A1- 2 572 350

## Description

### Object of the invention

The present invention relates to a sledge with lever-steerable runners, which allow controlling the direction and speed of the vehicle.

This invention is within the technical field of non-self-propelled vehicles used to slide over snow.

### Background of the invention

There are numerous examples of skates, skis, sliders and other simple machines for sliding over snow or moving in snowy areas used since ancient times, thousands of years ago, but none of them have the characteristics that are described below.

Currently, sledges with three supports, usable in snow, are known, where the front support is a runner guided by a handlebar or a steering wheel, and the rear support consists of two side runners; these vehicles being able to skid due to the characteristics of the snow.

These sledges are not easily steerable, as they do not have precise mechanisms for this function.

The patent AT 173 615 (KOLLER KURT) discloses a sledge with lever-steerable runners, wherein it comprises a pair of runners, each one comprising tree sections: a front runner, a central runner and a rear runner; the sledge has a control lever, a steering wheel that turns to the right or to the left, to turn both pair of runners, with its tree sections, in a single direction all of them.

### Description of the invention

The sledge with lever-steerable runners consists of a pair of runners, one on each side of the sledge, each one composed of three sections: a front runner (1), a central runner (2), a rear runner (3) and a control lever on both sides (left and right) of the sledge. It also comprises a crank, a connecting rod and a slide on its left and right sides as well as a shell and a seat.

When the right lever is pushed forwards, the front right runner rotates counterclockwise and the right rear runner rotates clockwise. When the right lever is pushed backwards, the front right runner rotates clockwise and the right rear runner rotates counterclockwise.

When the left lever is pushed forwards, the left front runner rotates clockwise and the left rear runner rotates counterclockwise. When the left lever is pushed backwards, the front left runner rotates counterclockwise and the right left runner rotates counterclockwise.

Using both levers, the direction and speed of the vehicle can be controlled: to turn left, the right lever is pushed forwards and the left lever backwards, while to turn right the right lever is pushed backwards and the left lever forwards. To brake, both levers are pushed forwards.

### Description of drawings

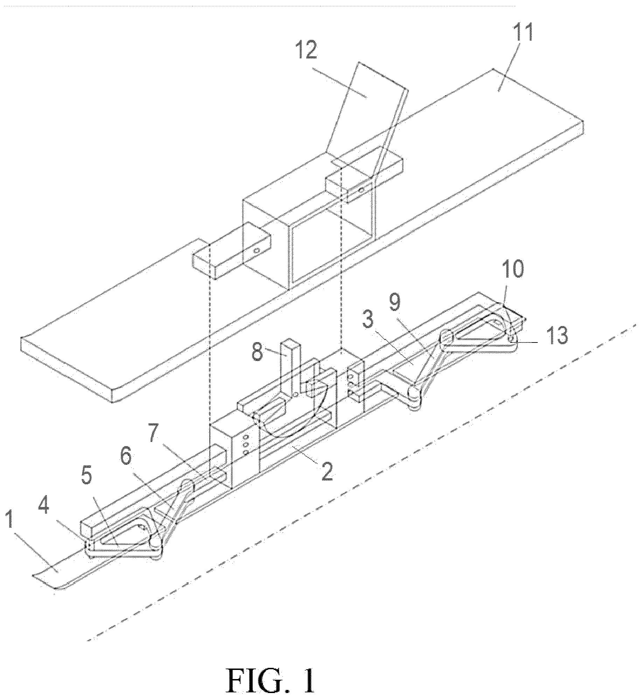

FIGURE 1, shows a perspective view of the right half of the sledge with lever-steerable runners, in which the different component parts can be seen. The left side is identical to the right one.

### Preferred embodiment

The different elements that make up the sledge are the following:
It is formed by a pair of runners, one on each side of the sledge, each one comprising three sections: a front runner (1), a central runner (2), a rear runner (3) and a control lever (8) on both sides of the sledge . On the front and rear runners (1, 3) it also comprises a crank (5 and 10), a connecting rod (6 and 9) and a slide (7) on its left and right sides as well as a shell (11) and a seat (12).

The front right (4) and rear (13) rotation axis are also shown in Figure 1.

The embodiment is as follows: based on a front runner (1), a central runner (2) and a rear runner (3), triangular cranks (5 and 10) are arranged on the front and on the rear runners, these cranks being attached to connecting rods (6 and 9), which in turn are attached to a slide (7), this slide (7) being operated with a control lever (8) arranged in the central part that is manually operated from the sledge seat (12).

The control lever (8) must contain a gearwheel and the slide (7) a rack to allow meshing of the gears without slipping of the runner or of the wheel.

By pushing the control lever (8) forwards, it transmits the movement to the slide (7) backwards, thereby pulling the connecting rod (6) backwards and pushing the connecting rod(9) backwards. Both connecting rods (6 and 9) transmit the movement to the cranks (5 and 10).

Pulling the connecting rod (6) of the front crank (5) causes it to rotate about the axis (4) causing the front runner (1) to move counterclockwise.

Pushing the connecting rod(9) over the rear crank (10) causes it to rotate about the axis (13) by moving the rear runner (3) clockwise.

The travel of the lever is angularly limited by the closure of the shape of the shell structure.

## Claims

1. A sledge with lever-steerable runners, **characterised in that** it comprises a pair of runners, one on each side of the sledge, each one comprising three sections: a front runner (1), a central runner (2), a rear runner (3) and a control lever (8) on both sides of the sledge;
- on the front and rear runners (1, 3) it also comprises a crank (5, 10), a connecting rod (6, 9) and a slide (7) on its left and right sides as well as a shell (11) and a seat (12);
- the control lever (8) having a gearwheel and the slide having a rack to allow meshing of the gears without slipping of the runner or of the wheel;
- the cranks (5, 10) have a triangular shape and are arranged on the front runner (1) and on the rear runner (3), these cranks (5, 10) being attached to the connecting rods (6, 9), which in turn are attached to the slide (7);
- the slide (7) being operated with the control lever (8) arranged in the central part that is manually operated from the sledge seat (12);
- by pushing the control lever (8) forwards, it transmits the movement to the slide (7) backwards, thereby pulling the connecting rod (6) backwards and pushing the connecting rod (9) backwards; both connecting rods (6, 9) transmit the movement to the cranks (5, 10);
- pulling the connecting rod (6) of the front crank (5) causes it to rotate about a first axis (4) causing the front runner (1) to move counterclockwise;
- pushing the connecting rod (9) over the rear crank (10) causes it to rotate about a second axis (13) by moving the rear runner (3) clockwise.

## Patentansprüche

1. Schlitten mit durch Hebel lenkbaren Kufen, **dadurch gekennzeichnet, dass** er ein Paar von Kufen umfasst, eine auf jeder Seite des Schlittens, wobei jede drei Abschnitte umfasst: eine vordere Kufe (1), eine mittlere Kufe (2), eine hintere Kufe (3) und einen Steuerhebel (8) auf beiden Seiten des Schlittens;
- an den vorderen und hinteren Kufen (1, 3) umfasst er außerdem eine Kurbel (5, 10), eine Verbindungsstange (6, 9) und einen Schieber (7) auf seiner linken und rechten Seite sowie eine Schale (11) und einen Sitz (12);
- wobei der Steuerhebel (8) ein Zahnrad aufweist und der Schieber eine Zahnstange aufweist, um einen Eingriff der Zahnräder ohne Verrutschen der Kufe oder des Rades zu ermöglichen;
- die Kurbeln (5, 10) weisen eine dreieckige Form auf und sind an der vorderen Kufe (1) und an der hinteren Kufe (3) angeordnet, wobei diese Kurbeln (5, 10) an den Verbindungsstangen (6, 9) befestigt sind, die wiederum an dem Schieber (7) befestigt sind;
- wobei der Schieber (7) mit dem Steuerhebel (8) betätigt wird, der in dem mittleren Teil angeordnet ist und von dem Schlittensitz (12) aus manuell betätigt wird;
- durch Drücken des Steuerhebels (8) nach vorne, überträgt er die Bewegung auf den Schieber (7) nach hinten, der dadurch die Verbindungsstange (6) nach hinten zieht und die Verbindungsstange (9) nach hinten drückt; beide Verbindungsstangen (6, 9) übertragen die Bewegung auf die Kurbeln (5, 10);
- das Ziehen der Verbindungsstange (6) der vorderen Kurbel (5) bewirkt, dass sie sich um eine erste Achse (4) dreht, was bewirkt, dass sich die vordere Kufe (1) gegen den Uhrzeigersinn bewegt;
- das Drücken der Verbindungsstange (9) zu der hinteren Kurbel (10) bewirkt, dass sie sich um eine zweite Achse (13) dreht und dabei die hintere Kufe (3) im Uhrzeigersinn bewegt.

## Revendications

1. Un traîneau doté à patins orientables par levier, **caractérisé en ce qu'**il comprend une paire de patins, un de chaque côté du traîneau, chacun comprenant trois sections : un patin avant (1), un patin central (2), un patin arrière (3) et un levier de commande (8) des deux côtés du traîneau ;
- sur les patins avant et arrière (1, 3), il comprend aussi une manivelle (5, 10), une bielle (6, 9) et un coulisseau (7) sur ses côtés gauche et droit ainsi qu'une coque (11) et un siège (12) ;
- le levier de commande (8) ayant une roue dentée et le coulisseau ayant une crémaillère pour permettre l'engrènement des engrenages sans glissement du patin ou de la roue ;
- les manivelles (5, 10) ont une forme triangulaire et sont disposées sur le patin avant (1) et sur le patin arrière (3), ces manivelles (5, 10) étant fixées aux bielles (6, 9), qui sont à leur tour fixées au coulisseau (7) ;
- le coulisseau (7) étant actionné avec le levier de commande (8) disposé dans la partie centrale qui est actionnée manuellement depuis le siège (12) du traîneau ;
- en poussant le levier de commande (8) vers l'avant, il transmet le mouvement au coulisseau (7) vers l'arrière, tirant ainsi la bielle (6) vers l'arrière et poussant la bielle (9) vers l'arrière ; les deux bielles (6, 9) transmettent le mouvement aux manivelles (5, 10) ;
- la traction de la bielle (6) de la manivelle avant (5) provoque sa rotation autour d'un premier axe (4) provoquant le déplacement du patin avant (1) dans le sens inverse des aiguilles d'une montre ;
- la poussée de la bielle (9) sur la manivelle arrière (10) la fait tourner autour d'un second axe (13) en déplaçant le patin arrière (3) dans le sens des aiguilles d'une montre.
